Europäisches Patentamt

European Patent Office

Office européen des brevets

(19)

(11) Publication number: **0 146 958**
**B1**

## (12) EUROPEAN PATENT SPECIFICATION

(45) Date of publication of patent specification: **18.10.89**

(21) Application number: **84116155.7**

(22) Date of filing: **21.12.84**

(51) Int. Cl.⁴: **B 01 D 46/12, F 24 F 13/00**

(54) **Air filter system with supporting and sealing grid.**

(30) Priority: **22.12.83 US 564570**

(43) Date of publication of application:
**03.07.85 Bulletin 85/27**

(45) Publication of the grant of the patent:
**18.10.89 Bulletin 89/42**

(84) Designated Contracting States:
**AT BE CH DE FR GB IT LI LU NL SE**

(56) References cited:
**US-A-3 486 311**
**US-A-4 233 044**

(73) Proprietor: **SnyderGeneral Corporation**
**3620 Trammell Crow Center 2001 Ross Avenue**
**Dallas, Texas 75201-2997 (US)**

(72) Inventor: **Shuler, Bernard Richard**
**10205 Radford Road**
**Louisville Kentucky (US)**

(74) Representative: **Morgan, James G. et al**
**MANITZ, FINSTERWALD & ROTERMUND**
**Robert-Koch-Strasse 1**
**D-8000 München 22 (DE)**

EP 0 146 958 B1

## Description

This invention relates to an air filter assembly comprising, when installed in a room, a latticework of horizontally extending interconnected filter support members defining filter openings, said filter support members having upwardly open channels for receiving a liquid sealant; and a plurality of filter elements each insertable in a respective one of said filter openings and each having a peripheral downwardly extending flange which, in use, extends below the surface of said sealant to thereby provide a sealed filter assembly. An air filter assembly of this kind is known from US-A-3,486,311.

Clean room facilities, such as areas used for the production of precision instruments or tooling, generally require an even temperature and a dust free environment. Covering the entire ceiling with a plurality of filters allows a gently flow of filtered air into the room at a reduced air velocity with a decreased filter resistance and power required in the air filtering system. A grid is required to support the filters and a suitable sealing material must be provided at the periphery of the filters to avoid any leakage and assure complete filtering of the air entering the room.

US-A-3,486,311 provides for a channel grid work in which a flange on the periphery of each filter is allowed to seat in the liquid sealant in the channel and form an air seal between the filter and the grid work. The knife edges of adjacent filters are received in the same channel. In existing systems, the channels extend the length and width of the room and all channels are in continuous liquid communication with each other.

With the prior art arrangement of US-A-3,486,311 it is necessary to ensure a precisely level condition.

It is the principal object of the present invention to provide an improved air filter assembly of the kind known from US-A-3,486,311 which does not need to be placed or maintained in a precisely level condition, but which nevertheless forms a leak proof filter assembly.

To satisfy this object the present invention provides a filter assembly of the initially named kind which is characterised in that said filter support members, with the possible exception of support members at the periphery of said room each have first and second upwardly open sealant receiving channels defined on opposite sides of dividing wall means, with the filter support members being connected together to define a closed loop sealant channel around each filter opening, with each closed loop sealant channel being isolated from the other sealant channels by said dividing wall means of said filter support members.

The presently proposed filter assembly thus provides for a double channel arrangement in which the flange of each filter is received in a separate channel isolated from the channel receiving the flange of the adjacent filter. This allows removal of any one filter for replacement with another filter as may be required without disturbing the seal of the adjacent filter. It also provides for a shorter channel chamber since the center wall formed by each channel member operates as a divider to isolate each perimeter channel chamber around each filter element. This decreases the need for a precisely level condition of the grid work because each channel chamber is essentially the length and width of the filter, and is much shorter than that of US-A-3,486,311 in which the channel chamber is the length and width of the room. Because of the shorter chamber length and width, fewer hangers are needed to support the grid work and greater flexibility of hanger location is permitted to allow for ducts, pipes, etc. The whole grid work need not be at the same level and perimeter channel chambers can be leveled individually.

Further advantageous forms of the invention are defined in the subordinate claims.

It should be pointed out that US-A-4,233,044 discloses an air filter assembly in which closed loop sealing channels are arranged on and around each filter element. The filter assembly of this prior art arrangement is however arranged in a vertical plane and is not suitable for use in a horizontal plane.

Referring to the drawings, the preferred embodiment of this invention is illustrated.

Fig. 1 is an isometric view of the grid supported from the ceiling with leveling adjustments on the supporting structure;

Fig. 2 is an exploded view of the channel intersection at the corner of each filter opening;

Fig. 3 is a cross-section view taken through a filter supporting channel cross member in the assembled position with the filters in the operating position;

Fig. 4 is the plan view of the assembled intersection of the filter supporting member;

Fig. 5 is a side elevation view showing the isolated chambers around each of the filter openings;

Fig. 6 is a cross-section view taken through a wall supported channel with the filter in the operating position; and

Fig. 7 is an exploded view of a modification of the channel intersection.

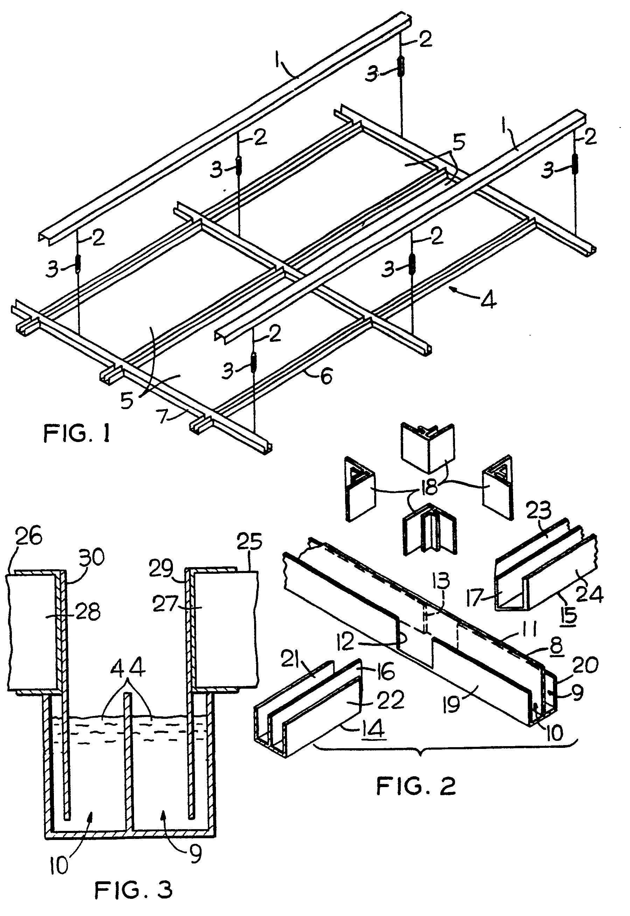

Referring to the drawings, Fig. 1 illustrates an isometric view of the grid and its supporting structure. The support beams 1 are mounted on the ceiling of the room and each one carries a plurality of supporting struts 2 having a turnbuckle 3 to adjust the level of grid 4 to assure retention of the liquid sealant in the individual channel chambers around each of the plurality of filter openings 5. The filter supporting members 6 and 7 run lengthwise and crosswise in the room and intersect to form individual channel chambers around each filter opening.

Fig. 2 illustrates a manner of constructing the intersection of the filter supporting members. A main filter supporting member 8 forms a double channel with a liquid sealant retaining channel chamber 9 and liquid sealant retaining channel chamber 10. A center dividing wall 11 is connected to a strut 2 placed along the length of the wall to support the main filter supporting member. At intervals along the length of the member 8, a segment is cut away to form openings 12 and 13 to receive cross members 14 and 15. The cross members 14 and 15 extend into the openings 12 and 13 until the center walls 16 and 17 abut the center wall 11 of the main filter supporting member. When the cross members are inserted in position, the brackets 18 are then positioned on the side walls 19 and 20 of the main filter supporting member 8 and the side walls 21 and 22 of the cross member 14 as well as the side walls 23 and 24 of the cross member 15. This fixes the assembly in its normal operating position and a caulking material may be used to seal the intersecting walls and bottom surfaces of the filter supporting members to create an independent peripheral channel chamber around the perimeter of each filter opening.

Fig. 3 is a cross-section view of a filter supporting channel member with the liquid sealant 44 in each of the channel chambers. For the purpose of illustration, it will be assumed that the filter supporting member is cross member 14 shown in Fig. 2 and the center wall 16 is essentially the same height as the two side walls 21, 22. Each filter 25 and 26 includes a filtering material 27 and 28. A peripheral flange 29 and 30 on each of the two filters extends into the liquid sealant chamber to form a sealed interface around the portion of the flange extending into the sealant 44. The liquid sealant is a heavy viscous material which allows the filter to seat in the operating position and allows the liquid sealant to flow around the flange. Since the liquid sealant is a heavy viscous material, it flows slowly around to form the seal and does not present a problem of splashing due to vibration or any other movement so long as the assembly remains substantially level.

Referring to Fig. 4, the plan view of the assembled components as illustrated and described in Fig. 2 are shown. The brackets 18 are in position to retain the cross members 14 and 15 in their assembled position on member 8. The center walls 16 and 17 abut the center wall 11 to form a seal at their intersection. This forms sealed peripheral channel chambers 31, 32, 33, 34 around each of the filter openings 35, 36, 37 and 38. Since each perimeter channel chamber is isolated from its adjacent channel chamber, the net effect is an isolation of the liquid sealant in adjacent chambers and any filter can be replaced with another filter without interfering with the seal of the adjacent filter.

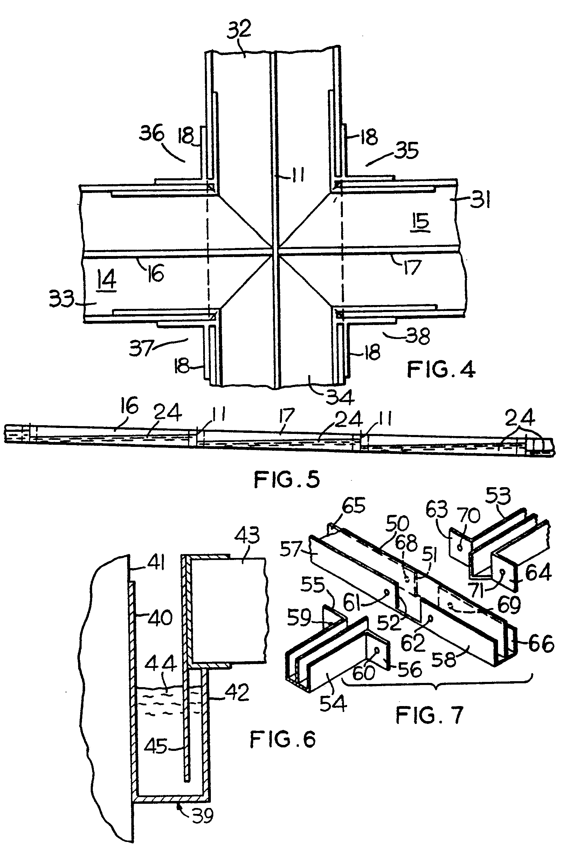

Fig. 5 illustrates the effect of the liquid sealant seeking its own level. Although it is preferred to have a level ceiling, minor variations from level may be present or may be caused due to the settling of a building. With the present design, liquid sealant does not run over the walls due to minor variations from level since the length of each channel chamber is limited to the length of the filter it supports. Because of this preferred construction, the danger of leakage due to minor variations from level is eliminated.

Fig. 6 illustrates a wall supported channel 39 in which the side wall 40 of the channel 39 is supported on the wall 41 of the room. The interior wall 42 of the channel provides a support for the filter 43. The liquid sealant 44 provides a seal around the peripheral flange 45 extending into the liquid sealant. The operation of this channel is the same as that provided in the channel chambers as illustrated in Fig. 4, although only a single channel is necessary since it is mounted on the wall.

Fig. 7 illustrates a modification of the construction of the grid wherein the main filter support member 50 is formed with openings 51 and 52 to receive cross members 53 and 54. Flanges 55 and 56 can be bolted or riveted to the side walls 57 and 58 through the openings 59, 60, 61 and 62 provided, similarly, flanges 63 and 64 can be bolted or riveted to the side walls 65 and 66 through openings 68, 69, 70 and 71.

The filter device operates in substantially the following manner. The support beams 1 are carried on the ceiling of the room and the struts 2 are carried on the support beams which in turn carry the grid 4. The position of the grid 4 can be adjusted by the turnbuckles 3 to assure a reasonably level position. The intersections are then joined by placing the brackets 18 in their assembled position to retain the main filter support members 8 with the cross filter support members 14 and 15 as shown in Fig. 2 and assembled in Fig. 4. A caulking material can be used to assure seal integrity at the intersection once the assembly is made. When the assembly is completed, the liquid sealant, which is a viscous material, is added to each perimeter channel chamber. The liquid sealant is heated and poured into the channel chambers 9 and 10, as shown in Fig. 3, until it reaches a level in the chamber sufficient to cover the lower ends of the flanges 29 and 30 of the filters. When this level is reached, the filters can then be seated in position so they rest on the outer walls or the channels as indicated in Fig. 3 and Fig. 6. It is not necessary that the channels be pressed into the liquid sealant since the sealant, although viscous, will allow the filter to settle in position and form an airtight seal around the filter once it is assembled. When it is assembled in the position as shown in Figs. 3 and 6, the filter assembly provides an airtight sealing and filtering arrangement to assure clean air operating conditions when the heating or air conditioning ventilating system is in operation.

## Claims

1. An air filter assembly comprising, when installed in a room, a latticework of horizontally extending interconnected filter support members (6, 7, 8, 39, 14, 15) defining filter openings (5; 35, 36, 37, 38), said filter support members (6, 7, 39, 14, 15) having upwardly open channels (9, 10) for receiving a liquid sealant (44); and a plurality of filter elements (25, 26, 43) each insertable in a respective one of said filter openings (5; 35, 36, 37, 38) and each having a peripheral downwardly extending flange (29, 30, 45) which, in use, extends below the surface of said sealant (44) to thereby provide a sealed filter assembly; characterised in that said filter support members (6, 7, 8, 14, 15), with the possible exception of support members (39) at the periphery of said room each have first and second upwardly open sealant receiving channels (9, 10) defined on opposite sides of dividing wall means (11, 16, 17) with the filter support members (6, 7, 8) being connected together to define a closed loop sealant channel (31, 32, 33, 34) around each filter opening (5; 35, 36, 37, 38), with each closed loop sealant channel being isolated from the other sealant channels by said dividing wall means (11, 16, 17) of said filter support members (6, 7, 8, 39).

2. An air filter assembly according to claim 1, characterised in that said support members comprise lengthwise support members (6, 8) and crosswise support members (7; 14, 15); in that each support member (6, 7; 14, 15), with the possible exception of support members (39) extending around the periphery of the room, comprises a center dividing wall (11, 16 or 17) and two side walls (19, 20 or 21, 22 or 23, 24) spaced from each other, said walls all extending from a bottom wall to define said first and second adjacent sealant receiving channels (9, 10) on respective sides of said center wall (11, 16, 17); in that the center walls (11) of said lengthwise support members (6, 8) are connected in fluid tight relation only to the center walls (16, 17) of abutting crosswise support members (7; 14, 15), and the side walls (19, 20) of said lengthwise support members (6; 19) are connected in fluid tight relation only to the side walls (21, 22 and 23, 24) of abutting crosswise support members; and in that said center wall and side wall connections create said closed loop sealant channels around the perimeter of each of said filter openings.

3. An air filter assembly according to claim 2 characterised in that said center wall comprises a single wall which is common to said first and second sealant receiving channels (9, 10).

4. An air filter assembly according to claims 2 or 3, characterised in that the center wall (11) of said lengthwise support member (6; 8) is higher than the center wall (16, 17) of said crosswise support members (7; 14, 15).

5. An air filter assembly according to claims 2, 3 or 4, characterised in that the side walls (19, 20) of said lengthwise support members (6; 8) are connected to the side walls of said crosswise support members (7; 14, 15) by corner brackets (18).

6. An air filter assembly according to any of the preceding claims 2, 3, 4 or 5, characterised in that said filters (25, 26) are supported by said side walls (19, 20, 21, 22, 23, 24) and in that said flanges (29, 30) do not contact said bottom wall.

7. An air filter assembly in accordance with claim 2, wherein the support members (39) extending around the periphery of the room have first and second side walls (42, 40) extending from a bottom wall to define a single U-shaped sealant receiving channel, with said second side walls (40) being disposed outwardly of said first side walls (42) and adjacent said periphery of said room, characterised in that the center walls (11, 16, 17) of double channel support members (8, 14, 15) adjoining said peripherally extending support members (39) are connected in fluid tight relation only to said second side walls (40); and in that the side walls (19, 20, 21, 22, 23, 24) of double channel support members (8, 14, 15) adjoining said peripherally extending support members (39) are connected in fluid tight relation only to said first side walls (42).

**Patentansprüche**

1. Luftfilteranordnung, die in einem Raum installiert, ein Gitterwerk von sich horizontal erstreckenden, miteinander verbundenen Filterstützgliedern (6, 7, 8, 39, 14, 15) umfaßt, welche Filteröffnungen (5; 35, 36, 37, 38) bestimmt, wobei die Filterstützglieder (6, 7, 8, 39, 14, 15) nach oben offene Profilrinnen (9, 10) zur Aufnahme eines flüssigen Dichtmittels (44) haben; und eine Vielzahl von Filterelementen (25, 26, 43), die jeweils in eine jeweilige Filteröffnung (5; 35, 36, 37, 38) einsetzbar sind und je einen sich nach unten erstreckenden Umfangsflansch (29, 30, 45) besitzen, welcher sich im Gebrauch bis unter die Oberfläche des Dichtmittels (44) erstreckt, um dadurch eine abgedichtete Filteranordnung zu schaffen; dadurch gekennzeichnet, daß die Filterstützglieder (6, 7, 8, 14, 15), mit der möglichen Ausnahme von Stützgliedern (39) am Umfang des Raumes, jeweils erste und zweite nach oben offene Dichtmittel-Aufnahmerinnen (89, 10) an entgegengesetzt liegenden Seiten von Teilwandmitteln (11, 16, 17) bestimmt haben, wobei die Filterstützglieder (6, 7, 8) miteinander zur Bildung einer geschlossenen Dichtmittel-Rinnenschleife (31, 32, 33, 34) um jede Filteröffnung (5; 35, 36, 37, 38) verbunden sind und jede geschlossene Dichtmittel-Rinnenschleife von den anderen Dichtmittelrinnen durch die Teilwandmittel (11, 16, 17) der Filterstützglieder (6, 7, 8, 39) isoliert ist.

2. Luftfilteranordnung nach Anspruch 1, dadurch gekennzeichnet, daß die Stützglieder Längs-Stützglieder (6, 8) und Quer-Stützglieder (7, 14, 15) umfassen; daß jedes Stützglied (6, 7; 14, 15), mit der möglichen Ausnahme von sich um den Umfang des Raumes erstreckenden Stützgliedern (39), eine zentrale Teilwand (11, 16 oder 17) und zwei Seitenwände (19, 20 oder 21, 22 oder 23, 24) mit Abstand voneinander umfaßt, wobei die Wände alle von einem Boden abstehen, um die ersten und zweiten benachbarten Dichtmittel-Aufnahmerinnen (9, 10) an jeweiligen Seiten der Zentralwand (11, 16, 17) zu bestimmen; daß die Zentralwände (11) der Längs-Stützglieder (6, 8) in fluiddichter Beziehung nur mit den Zentralwänden (16, 17) anstoßender Quer-Stützglieder (7; 14, 15) verbunden sind und die Seitenwände (19, 20) der Längs-Stützglieder (6; 19) in fluiddichter Beziehung nur mit den Seitenwänden (21, 22 und 23, 24) anstoßender Quer-Stützglieder verbunden sind; und daß die Zentralwand- und Seitenwand-Verbindungen die geschlossenen Dichtmittel-Rinnenschleifen um den Umfang jeder Filteröffnung schaffen.

3. Luftfilteranordnung nach Anspruch 2, dadurch gekennzeichnet, daß die Zentralwand eine einzelne Wand umfaßt, die den ersten und den zweiten Dichtmittel-Aufnahmerinnen (9, 10) gemeinsam ist.

4. Luftfilteranordnung nach Ansprüchen 2 oder 3, dadurch gekennzeichnet, daß die Zentralwand (11) der Längs-Stützglieder (6; 8) höher als die Zentralwand (16, 17) der Quer-Stützglieder (7; 14, 15) ist.

5. Luftfilteranordnung nach Ansprüchen 2, 3 oder 4, dadurch gekennzeichnet, daß die Seitenwände (19, 20) der LängsStützglieder (6; 8) mit den Seitenwänden der Quer-Stützglieder (7; 14, 15) mittels Ecklaschen (18) verbunden sind.

6. Luftfilteranordnung nach einem der vorangehenden Ansprüche 2, 3, 4 oder 5, dadurch gekennzeichnet, daß die Filter (25, 26) durch die Seitenwände (19, 20, 21, 22, 23, 24) abgestützt sind und daß die Flansche (29, 30) den Boden nicht berühren.

7. Luftfilteranordnung nach Anspruch 2, bei der die sich um den Umfang des Raumes erstreckenden Stützglieder (39) erste und zweite Seitenwände (42, 40) besitzen, die von einem Boden zur Bestimmung einer einzigen U-förmigen Dichtmittel-Aufnahmerinne abstehen, wobei die zweiten Seitenwände (40) außerhalb der ersten Seitenwände (42) angeordnet und dem Umfang des Raumes benachbart sind, dadurch gekennzeichnet, daß die Zentralwände (11, 16, 17) von an den sich längs des Umfangs erstreckenden Stützgliedern (39) anschließenden Doppelrinnen-Stützgliedern (8, 14, 15) in fluiddichter Beziehung nur mit den zweiten Seitenwänden (40) verbunden sind; und daß die Seitenwände (19, 20, 21, 22, 23, 24) von an den sich in Umfangsrichtung erstreckenden Stützgliedern (39) anschließenden Doppelrinnen-Stützgliedern (8, 14, 15) in fluiddichter Beziehung nur mit den ersten Seitenwänden (42) verbunden sind.

## Revendications

1. Ensemble ä filtre à air comprenant, lorsqu'il est installé dans une salle, un réseau d'éléments de support de filtre reliés entre eux, s'étendant horizontalement (6, 7, 8, 39, 14, 15) définissant des ouvertures de filtre (5; 35, 36, 37, 38), lesdits éléments de support de filtre (6, 7, 39, 14, 15) présentant des canaux (9, 10) ouverts vers le haut destinés à recevoir un liquide d'étanchéité (44); et plusieurs éléments de filtre (25, 26, 43) pouvant être insérés chacun dans l'une, correspondante desdites ouvertures de filtre (5; 35, 36, 37, 38) et ayant chacun un rebord périphérique (29, 30, 45) s'étendant vers le bas qui, lors de l'utilisation, s'étend au-dessous de la surface dudit liquide d'étanchéité (44) pour former ainsi un ensemble à filtre étanche; caractérisé en ce que lesdits éléments de support de filtre (6, 7, 8, 14, 15), à l'exception possible des éléments de support (39) à la périphérie de ladite salle, ont chacun des premier et second canaux (9, 10) de réception de liquide d'étanchéité ouverts vers le haut, définis sur les côté opposés de moyens à parois de séparation (11, 16, 17), les éléments de support de filtre (6, 7, 8) étant reliés entre eux pour définir un canal à boucle fermée (31, 32, 33, 34) pour liquide d'étanchéité autour de chaque ouverture de filtre (5; 35, 36, 37, 38), chaque canal à boucle fermée pour fluide d'étanchéité étant isolé des autres canaux à fluide d'étanchéité par lesdits moyens à parois de séparation (11, 16, 17) desdits éléments (6, 7, 8, 39) de support de filtre.

2. Ensemble à filtre à air selon la revendication 1, caractérisé en ce que lesdits éléments de support comprennent des éléments de support longitudinaux (6, 8) et des éléments de support transversaux (7; 14, 15); en ce que chaque élément de support (6, 7; 14, 15), à l'exception possible des éléments de support (39) s'étendant le long de la périphérie de la salle, comprend une paroi centrale (11, 16 ou 17) de séparation et deux parois latérales (19, 20 ou 21, 22 ou 23, 24) espacées les unes des autres, lesdites parois s'étendant toutes à partir d'une paroi de fond pour définir lesdits premier et second canaux adjacents (9, 10) de réception de liquide d'étanchéité sur des côtés respectifs de ladite paroi centrale (11, 16, 17); en ce que les parois centrales (11) desdits éléments longitudinaux de support (6, 8) sont reliées de manière étanche aux fluides uniquement aux parois centrales (16, 17) d'éléments transversaux de support (7; 14, 15) en butée, et les parois latérales (19, 20) desdits éléments longitudinaux de support (6; 19) sont reliées de façon étanche aux fluides uniquement aux parois latérales (21, 22 et 23, 24) d'éléments transversaux de support en butée; et en ce que lesdites liaisons des parois centrales et des parois latérales forment lesdits canaux à boucle fermée pour fluide d'étanchéité le long de la périphérie de chacune desdites ouvertures de filtre.

3. Ensemble à filtre à air selon la revendication 2, caractérisé en ce que ladite paroi centrale comprend une paroi unique qui est commune auxdits premier et second canaux (9, 10) de réception de liquide d'étanchéité.

4. Ensemble à filtre à air selon les revendications 2 ou 3, caractérisé en ce que la paroi centrale 11 dudit élément longitudinal (6; 8) de support est plus haute que la paroi centrale (16, 17) desdits éléments transversaux (7; 14, 15) de support.

5. Ensemble à filtre à air selon les revendications 2, 3 ou 4, caractérisé en ce que les parois latérales (19, 20) desdits éléments longitudinaux de support (6; 8) sont reliées aux parois latérales desdits éléments transversaux de support (7; 14, 15) par des équerres d'angle (18).

6. Ensemble à filtre à air selon l'une quelconque des revendications 2, 3, 4 ou 5, caractérisé en ce que lesdits filtres (25, 26) sont supportés par lesdites parois latérales (19, 20, 21, 22, 23, 24) et en ce que lesdits rebords (29, 30) ne sont pas en contact avec ladite paroi de fond.

7. Ensemble à filtre à air selon la revendication 2, dans lequel les éléments de support (39) s'étendant le long de la périphérie de la salle ont des première et seconde parois latérales (42, 40) s'étendant à partir d'une paroi de fond pour définir un canal de réception de liquide d'étanchéité unique, de forme en U, lesdites secondes parois latérales (40) étant disposées vers l'extérieur d'une première paroi latérale (42) et étant adjacentes à ladite périphérie de ladite salle, caractérisé en ce que les parois centrales (11, 16, 17) des éléments de support à canaux doubles (8, 14, 15) voisines des éléments (39) de support s'étendant périphériquement sont raccordées de façon étanche aux fluides uniquement auxdites secondes parois latérales (40); et en ce que lesdites parois latérales (19, 20, 21, 22, 23, 24) des éléments de support à canaux doubles (8, 14, 15) voisines des éléments de support (39) s'étendant périphériquement sont reliées de façon étanche au fluide uniquement auxdites premières parois latérales (42).

FIG. 1

FIG. 2

FIG. 3

FIG.4

FIG.5

FIG.6

FIG. 7

2